# EUROPÄISCHE PATENTSCHRIFT

(11) **EP 0 589 067 B1**
(45) Veröffentlichungstag und Bekanntmachung des Hinweises auf die Patenterteilung: **05.03.1997**
(21) Anmeldenummer: 92114663.5
(22) Anmeldetag: 27.08.1992
(51) Int. Cl.: G05B 19/042

(54) **Steuergerät, insbesondere für die Kraftfahrzeugtechnik**
Control device, in particular for use in motor vehicles
Dispositif de commande, en particulier pour véhicule automobile

(43) Veröffentlichungstag der Anmeldung: 30.03.1994
(73) Patentinhaber: SIEMENS AKTIENGESELLSCHAFT, 80333 München (DE)
(72) Erfinder: Kammerl, August, Dipl.-Ing. (FH), W-8411 Brunn (DE); Stärker, Klaus, Dr.-Ing., W-8402 Neutraubling (DE)

(56) Entgegenhaltungen:
- EP-A- 0 408 431
- EP-A- 0 474 493
- EP-A- 0 489 228
- EP-A- 0 499 695
- GB-A- 2 247 757
- US-A- 5 138 548

## Beschreibung

Die Erfindung betrifft ein Steuergerät nach dem Oberbegriff von Anspruch 1. Ein solches Steuergerät wird vorzugsweise dazu verwendet, den Motor, das automatische Getriebe oder sonstige Aggregate und Einrichtungen in einem Kraftfahrzeug zu steuern.

Eine bekannte Vorrichtung zur Steuerung von Kraftfahrzeug-Motoren weist einen Mikroprozessor, einen fest programmierten Speicher und einen frei programmierbaren Speicher auf. In den frei programmierbaren Speicher werden fahrzeugspezifische Daten, die Kennungen der Daten sowie Adreßzeiger eingegeben (DE-A1 37 23 024). Geänderte Daten können in beim ersten Speichervorgang frei gelassene Speicherplätze eingegeben werden. Die in den fest programmierten Speicher enthaltenen Programme können nachträglich nicht mehr verändert werden. Außerdem ist die bekannte Steuervorrichtung recht aufwendig aufgebaut, sie weist eine Programmiereinrichtung, eine Programmierschaltung, zwei vollständige Bussysteme und mehrere Daten- und Signalleitungen auf. Ein Verfahren zum schnellen Zugriff auf einen programmierbaren Speicher ist aus der EP-A-0 445 329 bekannt.

Aus EP-A-0 489 228 ist ein Automatisierungsgerät mit einem programmierbaren Logikbaustein und mit einer programmierbaren Funktionseinheit bekannt, wobei in die Funktionseinheit ein für eine serielle Bearbeitung strukturiertes Programm hinterlegt ist, das aus einem Teil eines Steuerprogramms erstellt ist, der Zeit - und/ oder Zählfunktionen aufweist. Der Logikbaustein führt der Funktionseinheit Eingangssignale zu, die von der Funktionseinheit entsprechend dem strukturierten Programm zu Ausgangsdaten verarbeitet werden und an den Logikbaustein zurückgegeben werden.

Der Erfindung liegt die Aufgabe zugrunde, ein einfach aufgebautes Steuergerät zu schaffen, bei dem sowohl die Programme als auch die Daten nachträglich in einfacher Weise abgeändert werden können.

Die vorgenannte Aufgabe wird erfindungsgemäß durch das Steuergerät nach Anspruch 1 gelöst. Zweckmäßige Weiterbildungen der Erfindung sind in den Unteransprüchen niedergelegt.

Ein Vorteil der Erfindung liegt insbesondere darin, daß für eine nachträgliche Änderung von Programmen und Daten - wie sie bei der zunehmend eingesetzten On-Board-Programmierung von Steuergeräten in Kraftfahrzeugen stattfindet - keine Speicher des Steuergeräts ausgetauscht werden müssen. Es können einfache, auf eine Leiterplatte aufgelötete Speicherbausteine verwendet werden.

Ein Ausführungsbeispiel der Erfindung wird im folgenden anhand der Zeichnung erläutert. Es zeigen:

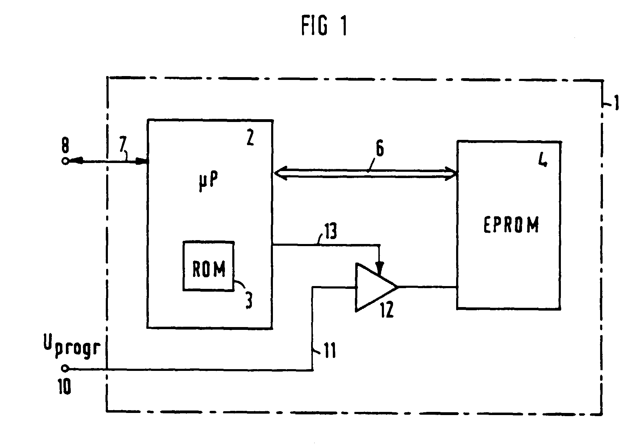

- Figur 1:: Ein Blockschaltbild eines erfindungsgemäßen Steuergeräts,
- Figur 2:: Ein Beispiel eines unveränderten Inhalts des programmierbaren Speichers eines Steuergeräts nach Figur 1 und
- Figur 3:: Ein Beispiel eines veränderten Inhalts des programmierbaren Speichers.

Ein Steuergerät 1 enthält einen Mikroprozessor 2, der mit einem Festwert- oder ROM-Speicher 3 versehen ist. Er enthält auch eine Reihe von anderen Schaltungsbestandteilen, wie z.B. eine zentrale Recheneinheit und einen als Arbeitsspeicher ausgebildeten Schreib-Lese-Speicher, die aber für die Erfindung nicht wesentlich und hier nicht dargestellt sind, da sie allgemein bekannt sind.

Das Steuergerät 1 enthält auch einen programmierbaren Speicher 4, der z.B. als EPROM-Baustein ausgeführt ist. Der Speicher 4 ist mit dem Mikroprozessor 2 über einen Adreß- und Datenbus 6 verbunden. Der Mikroprozessor 2 ist über eine Datenleitung 7 mit einer Diagnoseschnittstelle 8 verbunden, über die normalerweise Diagnosedaten von dem Steuergerät 1 abgefragt werden, über die aber auch zu ändernde Programmteile und Daten in den Mikroprozessor eingegeben werden können.

An einer Klemme 10 liegt eine Programmierspannung U_{progr} an, die zum Programmieren oder Beschreiben der Speicherstellen des programmierbaren Speichers 4 benötigt wird. Bei einem EPROM-Speicher beträgt diese Spannung etwa 12bis 13 V. Sie gelangt über eine Leitung 11 an einen Schalter 12. Wird dieser von dem Mikroprozessor 2 über eine Steuerleitung 13 durchgeschaltet, so gelangt die Programmierspannung zu einem Eingang 14 des Speichers 4 und bewirkt in diesem das Beschreiben von Speicherplätzen, deren Adressen über den Bus 6 von dem Mikroprozessor an den Speicher 4 übermittelt werden.

Der Festwertspeicher 3 enthält das Programm, das zum Programmieren des programmierbaren Speichers 4 erforderlich ist. Das oder die von dem Mikroprozessor abzuarbeitende Programme und die dazu erforderlichen Daten sind in dem Speicher 4 abgelegt und werden über den Adreß- und Datenbus 6 von dem Mikroprozessor ausgelesen.

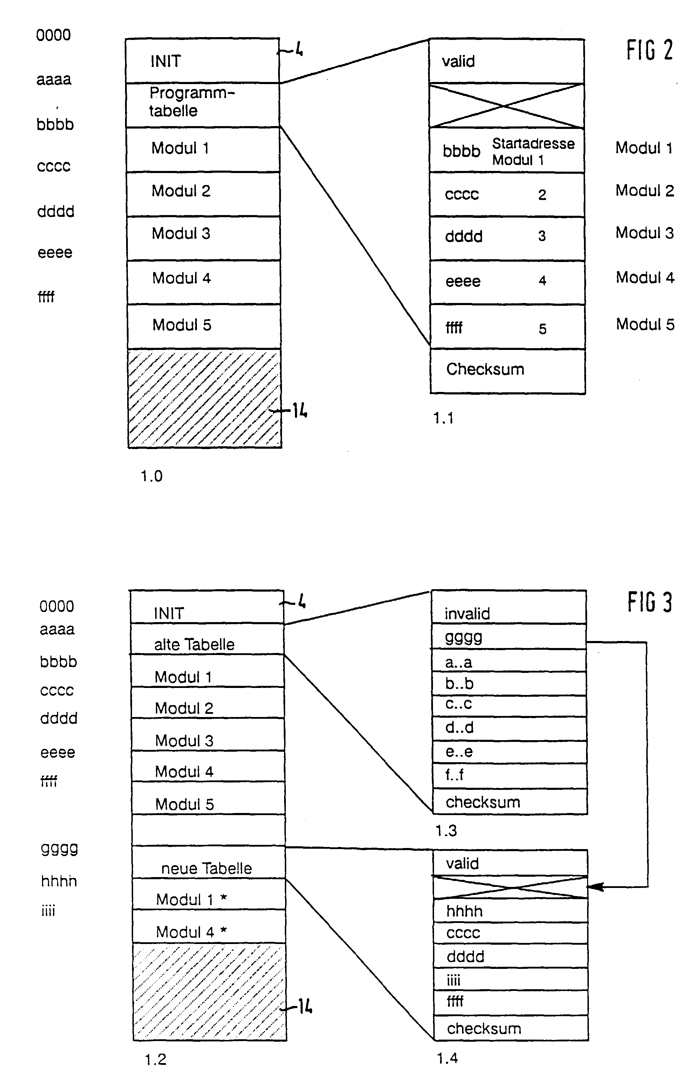

Das Ziel der Erfindung, beliebige Programmänderungen - die sich z.B. im Laufe der Erprobung oder Weiterentwicklung eines Kraftfahrzeuges ergeben - in dem EPROM-Speicher 4 durchführen zu können, ohne den Speicher 4 ausbauen oder seinen Inhalt löschen zu müssen, wird wie nachfolgend erläutert (Figuren 2 und 3) erreicht.

In EPROM-Speicherbausteinen steht üblicherweise an nicht programmierten oder beschriebenen Speicherstellen der hexadezimale Zahlenwert FF. Dies ist bei der Program-mierung des Speicherbausteins zu beachten. Außerdem ist zu beachten, daß der Speicherbaustein nur zu etwa 80 bis 90 % seines Speicherinhalts beschrieben wird. Dies ergibt sich bei der Programmierung normalerweise von selbst.

Sämtliche Programme werden beim Erstellen in Pakete auf-geteilt, die unterschiedliche Größe oder Länge aufweisen können, deren Größe aber maximal der Größe eines freien EPROM-Bereiches entspricht. Die gilt sowohl für die ursprünglichen als auch für die geänderten oder neu erstellten Programme und Programmteile.

Die Einsprung- oder Startadressen des jeweiligen Programms werden in dem EPROM in einer Programmtabelle abgelegt. In Figur 2, Spalte 1.0 ist die Programmtabelle in dem Speicherplatz aaaa abgelegt, ihr Inhalt ist aus der Spalte 1.1 von Figur 2 ersichtlich.

Die Startadresse der Programmtabelle wird bei der Initialisierung des Mikroprozessors in dessen Arbeitsspeicher gelesen. Die abzuarbeitenden Programme werden über diese Programmtabelle indiziert aufgerufen. In der Programmtabelle sind auch die zugehörigen Datenbereiche festgeschrieben. Bei Änderungen des Programmes wird am Beginn der Programmtabelle eingetragen, wo sich die neue, nun gültige Programmtabelle befindet; diese neue Programmtabelle wird zusammen mit dem neuen Programm oder Datenmodul in den noch ungenützten Speicherbereich geschrieben.

Nach einem RESET des Mikroprozessors beginnt das Programm beispielsweise bei der Adresse 0000 (Figur 2, Spalte 1.0). Bei der Adresse aaaa_{Hex} befindet sich die Programmtabelle, und an den Adressen bbbb, cccc, ... ffff stehen die Programm- oder Datenmodule Modul 1 bis Modul 5.

In der Programmtabelle (Figur 2, Spalte 1.1) enthält der erste Speicherplatz ein Codewort für die Gültigkeit der Tabelle - z.B. den hexadezimalen Wert aa -. Ist die Tabelle gültig, merkt sich das Programm die Adresse aaaa_{Hex} als Startadresse. Die Einsprungadressen der einzelnen Module werden auf diese Startadresse bezogen. Der letzte Speicherplatz enthält eine zur Datensicherung gebildete Prüfsumme.

In gültigen Programmtabellen steht somit im ersten Feld der Wert aaa_{Hex} und im zweiten Feld der Wert FF_{Hex}, wobei dieser wichtig für die Nachprogrammierung ist.

Bei der nachträglichen Programmierung wird dann z.B. in das erste Feld ein vorgegebenes Codewort für "ungültig" oder "invalid" - z.B. der Wert 00_{Hex} - und in das zweite Feld die Startadresse der neuen Programmtabelle - im Beispiel der Wert gggg (Figur 3, Spalte 1.4) - geschrieben.

Die neue programmierte Programmtabelle (Figur 3, Spalte 1.4) ist gleich aufgebaut wie die alte Programmtabelle: ihr erstes Feld enthält den Wert aa_{Hex} für "gültig", das zweite Feld den Wert FF_{Hex} (in der Zeichnung ist dieser noch unbeschriebene Speicherplatz durchgekreuzt dargestellt). Die Startadressen des Moduls 1 (bbbb) wurde allerdings durch die Startadresse eines Ersatzmoduls 1∗ (hhhh) ersetzt. Das gleiche gilt für Modul 4, dessen Startadresse durch die eines Ersatzmoduls 4∗ (iiii vgl. Figur 2, Spalte 1.4) ersetzt wurde.

Der freie Speicherplatz 14 ist in den Figuren 2 und 3 schraffiert dargestellt. In Figur 3, Spalte 1.2 sind in ihn bereits die Ersatzmodule 1∗ und 4∗ eingeschrieben. Die Figuren sind schematisch, nicht maßstäblich gezeichnet. Die hier beschriebene Änderung von Programmen, Programmteilen oder Daten kann solange fortgesetzt werden, wie freier Speicherplatz zur Verfügung steht. Dadurch wird das aufwendige Auswechseln von Speicherbausteinen und die Verwendung von Speicherbausteinen mit Stecksockeln in vielen Fällen vermieden.

## Patentansprüche

1. Steuergerät (1), insbesondere für die Kraftfahrzeugtechnik, mit einem Mikroprozessor (2), einem Festwertspeicher (3) und einem programmierbaren Speicher (4), in dem von dem Mikroprozessor zu verarbeitende Daten abgelegt sind,
**dadurch gekennzeichnet,**
daß in dem programmierbaren Speicher (4) das von dem Prozessor zu verarbeitende Pogramm abgelegt ist,
daß der programmierbare Speicher (4) freie Bereiche vorgegebener Länge aufweist, und
daß die Programme in Pakete aufgeteilt sind, deren Länge maximal der Länge eines freien Bereiches des programmierbaren Speichers (4) entspricht, so daß geänderte Programme nachträglich in den programmierbaren Speicher einschreibbar sind.

2. Steuergerät nach Anspruch 1, dadurch gekennzeichnet, daß der Festwertspeicher (3) ein Programm zum Programmieren des programmierbaren Speichers (4) enthält.

3. Steuergerät nach Anspruch 1, dadurch gekennzeichnet, daß durch das in dem Festwertspeicher (3) abgelegte Programm ein Schalter aktiviert wird, durch den eine Programmierspannung an den programmierbaren Speicher (4) angelegt wird.

4. Steuergerät nach Anspruch 1, dadurch gekennzeichnet, daß in dem programmierbaren Speicher (4) eine Programmtabelle abgelegt ist, in der die Adressen der jeweils gültigen Programm-Module enthalten sind.

5. Steuergerät nach Anspruch 4, dadurch gekennzeichnet, daß die Programmtabelle einen Speicherplatz aufweist, aus deren Inhalt sich ergibt, ob die Tabelle gültig ist.

6. Steuergerät nach Anspruch 4, dadurch gekennzeichnet, daß die Programmtabelle einen Speicherplatz aufweist, aus deren Inhalt sich bei einer ungültigen Tabelle die Adresse der sie ersetzenden gültigen Tabelle ergibt.

## Claims

1. Control device (1), in particular for motor vehicle engineering, having a microprocessor (2), a read-only memory (3) and a programmable memory (4) in which data to be processed by the microprocessor are stored, characterized in that the program to be processed by the processor is stored in the programmable memory (4), in that the programmable memory (4) has free areas of prescribed length, and in that the programs are divided into packets whose length corresponds at maximum to the length of a free area of the programmable memory (4), so that modified programs can subsequently be written into the programmable memory.

2. Control device according to Claim 1, characterized in that the read-only memory (3) contains a program for programming the programmable memory (4).

3. Control device according to Claim 1, characterized in that a switch by means of which a programming voltage is applied to the programmable memory (4) is activated by means of the program stored in the read-only memory (3).

4. Control device according to Claim 1, characterized in that a program table in which the addresses of the respectively valid program modules are contained is stored in the programmable memory (4).

5. Control device according to Claim 4, characterized in that the program table has a memory location whose contents determine whether the table is valid.

6. Control device according to Claim 4, characterized in that the program table has a memory location whose contents, in the case of an invalid table, determine the address of the valid table replacing it.

## Revendications

1. Dispositif de commande (1) destiné en particulier aux véhicules automobiles, comportant un microprocesseur (2), une mémoire morte (3) et une mémoire programmable (4), dans lequel sont placées des données à traiter par le microprocesseur, caractérisé en ce que le programme à traiter par le processeur est placé dans la mémoire programmable (4), la mémoire programmable (4) présente des zones libres de longueur prédéterminée et les programmes sont divisés en paquets, dont la longueur correspond au maximum à la longueur d'une zone libre de la mémoire programmable (4), de sorte que des programmes modifiés peuvent ultérieurement être écrits dans la mémoire programmable.

2. Dispositif de commande selon la revendication 1, caractérisé en ce que la mémoire morte (3) contient un programme pour la programmation de la mémoire programmable (4).

3. Dispositif de commande selon la revendication 1, caractérisé en ce que le programme placé dans la mémoire morte (3) active un commutateur par lequel une tension de programmation est appliquée à la mémoire programmable (4).

4. Dispositif de commande selon la revendication 1, caractérisé en ce qu'une table des programmes contenant les adresses des modules de programmes valides respectifs est placée dans la mémoire programmable (4).

5. Dispositif de commande selon la revendication 4, caractérisé en ce que la table des programmes comporte un emplacement de mémoire dont le contenu indique si la table est valide.

6. Dispositif de commande selon la revendication 4, caractérisé en ce que la table des programmes comporte un emplacement de mémoire dont le contenu indique, si la table est invalide, l'adresse de la table valide qui la remplace.
